# EUROPÄISCHE PATENTSCHRIFT

(11) **EP 0 416 443 B1**
(45) Veröffentlichungstag und Bekanntmachung des Hinweises auf die Patenterteilung: **30.11.1994**
(21) Anmeldenummer: 90116458.2
(22) Anmeldetag: 28.08.1990
(51) Int. Cl.: B62J 6/20

(54) **Speichenreflektor für Zweiräder, insbesondere Fahrräder**
Spoke-mounted reflector for two-wheeled vehicle, particularly bicycle
Réflecteur de rayon pour deux roues en particulier pour bicyclettes

(30) Priorität: 07.09.1989 DE 3929799
(43) Veröffentlichungstag der Anmeldung: 13.03.1991
(73) Patentinhaber: Lichtmannegger, Ernst, D-82467 Garmisch-Partenkirchen (DE)
(72) Erfinder: Lichtmannegger, Ernst, D-82467 Garmisch-Partenkirchen (DE)
(74) Vertreter: Flosdorff, Jürgen, Dr.

(56) Entgegenhaltungen:
- DE-A- 3 406 769
- DE-U- 8 703 402
- FR-A- 2 525 551
- US-A- 3 924 928
- US-A- 3 951 517

## Beschreibung

Die Erfindung betrifft einen Speichenreflektor für Zweiräder, insbesondere Fahrräder, mit einem ersten Reflektorelement, das an Speichen im wesentlichen parallel zur Speichenebene befestigt ist und beidseitig Reflektorflächen aufweist, und mit einem zu dem ersten Reflektorelement im Winkel angeordneten zweiten Reflektorelement.

Seit einiger Zeit ist es gesetzlich vorgeschrieben, Fahrräder mit Speichenreflektoren zu versehen, damit die Fahrräder auch bei Dunkelheit besser sichtbar sind. Um dieses Erfordernis zu erfüllen, sind verschiedenartige Speichenreflektoren bekannt, deren Reflektorelement beispielsweise die Form eines Kreises, Rechtecks oder Kreisringsabschnitts hat und die mit verschiedenartigen Befestigungsmitteln ausgestattet sind, mit denen sie zwischen zwei benachbarten Speichen angebracht werden können. Das Reflektorelement besteht im allgemeinen aus einer lichtdurchlässigen Kunststoffplatte mit einer solchen inneren Struktur, daß die Platten einfallendes Licht reflektieren.

Die üblicherweise anzutreffenden Speichenreflektoren haben ein Reflektorelement, das im wesentlichen parallel zur Speichenebene angeordnet ist und daher Licht quer zur Speichenebene reflektieren kann. Dies bedeutet, daß bei Dunkelheit an einem seitlich angestrahlten Fahrrad rotierende Reflektoren für denjenigen sichtbar werden, der sich seitlich neben dem Fahrrad befindet.

Damit ein Fahrrad bei Dunkelheit auch für aus beiden Fahrtrichtungen herannahende Kraftfahrzeuge sichtbar ist, ist eine Fahrradbeleuchtung in Form einer vorderen Lampe sowie eines rückwärtigen Strahlers vorgeschrieben, wobei zusätzlich die Pedale mit Reflektoren ausgerüstet sind. Die Pedalreflektoren können jedoch leicht durch Schuhabsätze der fahrenden Person verdeckt werden, so daß sie im allgemeinen wenig wirkungsvoll sind, und die Fahrradbeleuchtung kann leicht durch einen Defekt ausfallen, beispielsweise durch Bruch das Glühfadens der einzigen Birne des Rückstrahlers. In einem solchen Falle ist ein Fahrrad nachts auf unbeleuchteter Straße von einem von hinten herannahenden Kraftfahrzeug kaum zu erkennen, so daß der Radfahrer einer sehr großen Unfallgefahr ausgesetzt ist.

Damit die gesetzlich vorgeschriebenen Speichenreflektoren nicht nur quer zur Fahrradebene, sondern auch in Richtung der Fahrradlängsachse,d.h. auf einer Straße nach vorne und hinten ein Fahrrad kenntlich machen können, ist in der DE-0S 34 20 534 bereits ein Speichenreflektor vorgeschlagen worden, der mittels Klemmschenkeln an zwei benachbarten Speichen befestigbar ist. An der in der Befestigungslage radial äußeren Seite befindet sich an den Klemmschenkeln ein erster hohlschienenförmiger Abschnitt, in den ein erstes Reflektorelement im wesentlichen parallel zur Speichenebene einsetzbar ist, während sich an der radial inneren Seite ein hierzu senkrechter hohlschienenförmiger Abschnitt befindet, der ein zweites Reflektorelement aufnehmen kann, das damit senkrecht zur Speichenebene angeordnet ist und entlang der Fahrradlängsachse wirksam ist. Wenn demnach ein mit diesem vorbekannten Speichenreflektor versehenes Rad von einem von hinten (oder vorne) herannahenden Fahrzeug angestrahlt wird, reflektiert das senkrecht zur Speichenebene angeordnete Reflektorelement Licht in dieser Richtung.

Der bekannte Speichenreflektor erhöht die Sicherheit des Fahrrades im Straßenverkehr jedoch nur unzureichend. Fahrräder sind üblicherweise mit Schutzblechen versehen, die den größten Bereich eines senkrecht zur Speichenebene angeordneten Reflektorelementes überdecken, wobei der mögliche seitliche Überstand durch den Fahrradrahmen begrenzt ist, der nur einen geringen seitlichen Freiraum zuläßt. Dies bedeutet, daß bei dem vorbekannten Speichenreflektor das senkrecht zur Speichenebene angeordnete Reflektorelemente, dessen radiale Abmessungen etwa mit denjenigen des in der Speichenebene liegenden anderen Reflektorelements übereinstimmt, nur eine geringe wirksame Reflektorfläche hat, die insbesondere bei schlechten Sichtverhältnissen wie bei Nebel oder Regen nur schwerlich sichtbares Licht reflektieren.

Wenn sich zudem in der Dämmerung oder Dunkelheit (oder bei Nebel etc.) ein Kraftfahrzeug einem vor ihm fahrenden, unbeleuchteten Fahrrad nähert, zeigt der vorbekannte Reflektor die Existenz des Fahrrades bestenfalls solange erkennbar an, wie sich der Kraftfahrer etwa in der Verlängerung der Fahrradlängsachse befindet. Dies ist beispielsweise auf gerader Strecke und bei größerem Abstand zwischen den beiden Fahrzeugen der Fell. Je mehr sich jedoch das Kraftfahrzeug dem Fahrrad nähert, umso mehr gerät der Kraftfahrer, der sich in aller Regel weiter zur Straßenmittel hin befindet als ein Radfahrer, aus der Fahrradlängsachse, so daß er einige Zeit vor dem Überholvorgang, bei dem dann die Kollisionsgefahr besteht, aus dem Reflexionsbereich des vorbekannten Speichenreflektors gerät. Dies trifft beispielsweise auch für solche Situationen zu, in denen der Radfahrer in eine Straßenkurve eintritt oder einen "Schlenker" in Richtung der Fahrbahnmittel fährt, was besonders gefährlich ist.

Da die Anzahl der bei Dunkelheit unbeleuchtet fahrenden Fahrrädern in letzter Zeit beträchtlich zugenommen hat, in erster Linie wegen der sogenannten Mountain-Bikes, die in aller Regel aus Gewichtsgründen keine elektrische Beleuchtung haben, besteht ein großes Bedürfnis danach, die Verkehrssicherheit von Fahrrädern, auch von solchen, die nicht ordnungsgemäß ausgestattet sind, zu erhöhen. Dabei stellt speziell das Überholen von Fahrrädern durch Kraftfahrzeuge auf unbeleuchteten Straßen, z. B. auf schnell befahrenen Landstraßen, ein überaus großes Risiko für Radfahrer dar, das verringert werden sollte.

Aus dem DE-U-87 034 02.6 ist ein Speichenreflektor bekannt, der außer einem in der Speichenebene angeordneten, plattenförmigen Reflektorelement ein weiteres, rechtwinklig hierzu angeordnetes, plattenförmiges Reflektorelement enthält.

Aus der US-A-3 924 928 ist ein Speichenreflektor gemäß dem Oberbegriff des Patentanspruchs 1 bekannt. Dieser Speichenreflektor besteht aus zwei Teilen, wobei auf einem in der Speichenebene angeordneten Reflektorelement ein im Querschnitt dreieckiges Element befestigt ist, welches eine schräg nach hinten und schräg nach vorne weisende Reflektorfläche aufweist, wobei außerdem ein kreisförmiges, nach innen weisendes zweites Reflektorelement auf diesen Speichenreflektor aufgesetzt ist. Zu diesem Zweck ist aus dem kreisförmigen Reflektorelement ein Schlitz ausgespart, der von dem in der Speichenebene liegenden Element durchgriffen ist.

Der vorliegenden Erfindung liegt die Aufgabe zugrunde, einen Speichenreflektor der betrachteten Art so weiter zu entwickeln, daß er für Fahrräder (und andere Zweiradfahrzeuge) insbesondere in solchen Verkehrssituationen, in denen das Fahrrad bei schlechten Sichtverhältnissen überholt wird, eine erhöhte Sicherheit bietet.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Die Erfindung sieht vor, daß eine oder beide Reflektorseiten des zweiten Reflektorelementes in der Draufsicht polygonförmig verlaufen, indem vorzugsweise zwei im Winkel zueinander verlaufende Reflektorflächenabschnitte vorgesehen sind, derart, daß der in die Reflektorfläche des ersten Reflektorelementes angrenzende Flächenabschnitt mit diesem einen Winkel größer 90° einschließt. Dieser Flachenabschnitt wird dann wirksam, wenn sich ein Kraftfahrer auf gerader Strecke dem Fahrzeug angenähert hat oder wenn sich beide Fahrzeuge im Winkel zueinander bewegen, beispielsweise in einer Kurvenfahrt. Durch die erfindungsgemäße Maßnahme gerät der Fahrer des nachfolgenden Fahrzeugs vor dem-Überholvorgang in einen Reflexionsbereich, der ihm die Existenz und Position des zu überholenden Fahrrades anzeigt, wodurch dessen Sicherheit entscheidend erhöht wird.

Die Erfindung sieht demnach vor, daß wenigstens eine Reflektorfläche des zweiten Reflektorelementes mit der angrenzenden Reflektorfläche des ersten Reflektorelementes einen Winkel einschließt, der größer als 90° ist, vorzugsweise 100° bis 160°. Hierdurch wird zudem erreicht, daß die wirksame Fläche des zweiten Reflektorelementes nicht von einem eventuell vorhandenen Schutzblech des Rades überdeckt wird, wenn die Ausrichtung der Reflektorfläche so getroffen ist, daß sie am Rand des Schutzblechs vorbei weist. Damit ist ein mit dem erfindungsgemäßen Reflektor ausgestattetes Fahrrad sowohl für ein sich etwa in der Verlängerung der Fahrradlängsachse näherndes Kraftfahrzeug als auch für ein seitlich versetzt fahrendes Kraftfahrzeug gut sichtbar, wodurch seine Sicherheit beträchtlich erhöht ist.

Mit Vorteil wird vorgeschlagen, daß sich zudem das zweite Reflektorelement über eine größere Länge erstreckt als das erste Reflektorelement, wodurch eine vergrößerte wirksame Reflexionsfläche geschaffen ist, die als langgestrecktes, wanderndes Lichtband erscheint. Vorzugsweise steht das zweite Reflektorelement beidseitig gleich weit über das erste Reflektorelement über.

Nach einem bevorzugten Vorschlag der Erfindung ist das zweite Reflektorelement mit seiner Mittelachse im wesentlichen im rechten Winkel zu dem ersten Reflektorelement angeordnet, wobei diese Ausbildung besonders einfach zu treffen ist.

Die Reflexionswirkung des erfindungsgemäßen Reflektors kann dadurch noch erhöht werden, daß das zweite Reflektorelement drei oder mehr im Winkel zueinander verlaufende Reflexions-Flächenabschnitte aufweist. Vorzugsweise schließen die jeweils benachbarten Reflexionsflächenabschnitte denselben Winkel zwischen sich ein.

Die konische Querschnittsverbreiterung des zweiten Reflektorelementes im Bereich der Verbindungsfläche mit dem ersten Reflektorelement erhöht zudem die Stabilität des erfindungsgemäßen Speichenreflektors, da wegen der vergrößerten Aufstandsfläche und Querschnittsabmessungen des zweiten Reflektorelementes im Befestigungsbereich eine beträchtlich erhöhte Festigkeit gewährleistet ist.

Das zweite Reflektorelement kann derart an dem ersten Reflektorelement angebracht sein, daß die Berührungs-bzw. Verbindungsfläche der beiden Reflektorelemente in der Einbaulage im wesentlichen entlang der Radialen des Speichenrades verläuft. Bei dieser Ausgestaltung weisen die Reflektorflächen des Reflektorelementes in der obersten und untersten Position am Rad in horizontaler Richtung nach vorn und hinten. Diese vertikale Anordnung der Reflektorflächen des zweiten Reflektorelementes kann durch dessen Anordnung im Winkel zur Radialen des Speichenrades auf vorgegebene Weise positioniert werden, wobei ein rechter Winkel zur Radialen bevorzugt sein kann, da hierbei die Reflektorflächen auf halber Höhe ihres Umlaufs frontal nach vorne und hinten weisen.

Die beiden Reflektorelemente können durch eine Klebeverbindung aneinander befestigt werden, die besonders einfach herstellbar ist. Andererseits können die beiden Reflektorelemente auch gleich einstückig hergestellt werden, beispielsweise durch einen Gieß- oder Preßvorgang.

Nach einem weiteren Vorschlag der Erfindung kann das zweite Reflektorelement mit einem Befestigungsmittel, beispielsweise in Form einer Klammer versehen sein, mit dem es an dem ersten Reflektorelement befestigbar ist. Diese Ausbildung hat den Vorteil, daß bereits vorhandene Reflektorelemente, die in der Speichenebene angebracht sind, nachträglich mit dem erfindungsgemäßen zweiten Reflektorelement versehen werden können.

Weitere Merkmale, Einzelheiten und Vorteile der Erfindung ergeben sich aus der nachfolgenden Beschreibung einiger bevorzugter Ausführungsformen des erfindungsgemäßen Speichenreflektors sowie anhand der Zeichnung. Dabei zeigen:
- Fig. 1: eine perspektivische Ansicht einer ersten Ausführungsform des erfindungsgemäßen Speichenreflektors;
- Fig. 2: eine Aufsicht auf die Reflektorelemente des Speichenreflektors gemäß Figur 1;
- Fig. 3: eine Aufsicht auf die Reflektorelemente einer zweiten Ausführungsform des Speichenreflektors.

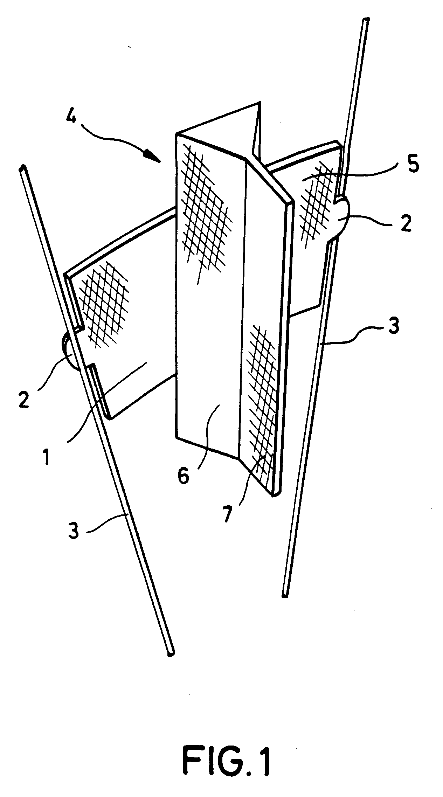

Die Figuren zeigen auf weitgehend schematische Weise zwei verschiedene Ausführungsformen des erfindungsgemäßen Speichenreflektors. Der Speichenreflektor gemäß Figur 1 enthält ein erstes Reflektorelement 1, das die Form eines Kreisringabschnitts hat und mittels einer lediglich angedeuteten Klemmeinrichtung 2 an zwei benachbarten Speichen 3 parallel zur Speichenebene befestigt ist.

An dem ersten Reflektorelement 1 ist beispielsweise mittels einer Klebeverbindung ein zweites Reflektorelement 4 befestigt, das die Reflektorfläche 5 des ersten Reflektorelementes 1 in zwei gleich große, spiegelsymmetrische Flächenabschnitte unterteilt. In diesem Falle liegt die Verbindungsfläche zwischen den beiden Reflektorelementen 1, 4 im wesentlichen auf der Radialen des Speichenrades, es wird jedoch betont, daß die Längsachse der Verbindungsfläche im Winkel, vorzugsweise in einem rechten Winkel zur Radialen verlaufen kann, wobei dann die Reflektorfläche des Reflektorelementes 4 im Verlaufe ihrer kreisenden Bewegung an anderer Stelle die wirksame Reflexionsposition einnimmt.

Das Reflektorelement 4 ragt beidseitig über das Reflektorelement 1 hinaus, um die Reflektorfläche zu vergrößern. Diese Maßnahme trägt dazu bei, daß aus der Sicht eines vor oder hinter dem Fahrrad befindlichen Beobachters die Reflektorfläche des Reflektorelementes 4 nicht nur kurz aufblitzt, sondern als langgestrecktes Lichtband erscheint. Die Breite des Reflektorelementes 4 ist durch den Abstand vom Fahrradrahmen bzw. der die Schutzbleche befestigenden Streben vorgegeben.

Der Speichenreflektor wird so an dem Rad befestigt, daß das Reflektorelement 4 aus der Sicht einer auf dem Fahrrad sitzenden Person zur linken Seite weist.

Die innere Oberfläche der Reflektorelemente ist so ausgebildet, daß sie reflektierende Eigenschaften hat, wobei sie facettenartig gestaltet ist, so daß sie unterschiedlich gerichtete Lichtbündel abstrahlt. Wenn sich beispielsweise einem mit dem erfindungsgemäßen Speichenreflektor ausgerüsteten Fahrrad ein Kraftfahrzeug von hinten nähert und bei Dunkelheit mit schräg einfallendem Licht den Speichenreflektor beleuchtet, fällt ein Teil des von den Reflektorelementen 1 und 4 wieder abgestrahlten Lichtes auf die Reflektorfläche des jeweils anderen Reflektorelementes, wodurch die Lichtstärke der Reflexion von den Reflektorflächen erhöht wird. Dadurch ist die Sichtbarkeit des Speichenreflektors auch bei schwachem Lichteinfall und/oder bei schlechten Sichtverhältnissen verbessert, so daß die Unfallgefahr für einen Radfahrer verringert ist.

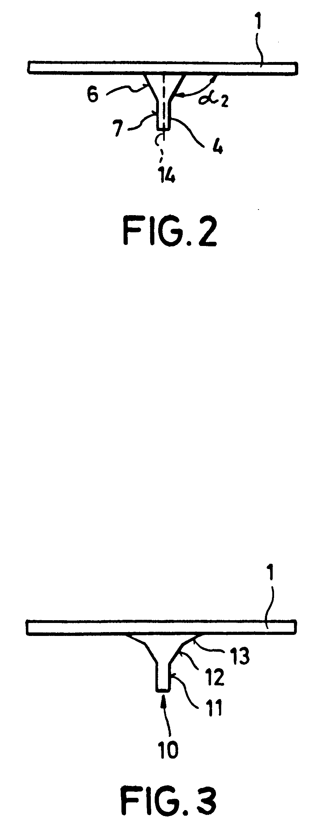

Weiterhin mit Bezug auf die Figuren 1 und 2 hat das Reflektorelement 4 beidseitig zwei im Winkel zueinander angeordnete Flächenabschnitte, wobei der an das Reflektorelement 1 angrenzende Abschnitt 6 im Winkel α 2 gleich ca. 115° zur Reflektorfläche des Reflektorelementes 1 verläuft, während der Flächenabschnitt7 im 90°-Winkel angeordnet ist. Bei dieser Ausführungsform ist neben einer verbesserten Reflexion eine große Festigkeit der Verbindung der beiden Reflektorelemente 1, 4 wegen der Größe der Verbindungsfläche gewährleistet.

Fig. 3 zeigt eine Ausführungsform, bei der das zweite Reflektorelement 10 an jeder Reflektorseite drei Reflektorflächen 11, 12, 13 aufweist, wobei jede Fläche mit der benachbarten Fläche denselben Winkel einschließt. Die Reflektorflächen können auch nur an einer Seite ausgebildet sein.

## Patentansprüche

1. Speichenreflektor für Zweiräder, insbesondere Fahrräder, mit einem ersten Reflektorelement (1), das an Speichen (3) im wesentlichen parallel zur Speichenebene befestigt ist und vorzugsweise beidseitig Reflektorflächen aufweist, und mit einem zu dem ersten Reflektorelement (1) im Winkel angeordneten Zweiten Reflektorelement (4, 10),
**dadurch gekennzeichnet,**
daß das zweite Reflektorelement (4, 10) an wenigstens einer Seite wenigstens zwei im Winkel zueinander verlaufende Reflektorflächenabschnitte (6, 7; 11, 12, 13) aufweist, wobei der an die Reflektorfläche des ersten Reflektorelementes (1) angrenzende Flächenabschnitt (6, 13) mit dieser einen Winkel α >90° einschließt.

2. Speichenreflektor nach Anspruch 1,
dadurch gekennzeichnet, daß die Mittelachse (14) des Reflektorelementes (4, 10) im wesentlichen im rechten Winkel zu dem ersten Reflektorelement (1) verläuft.

3. Speichenreflektor nach Anspruch 1 oder 2,
dadurch gekennzeichnet, daß sich das zweite Reflektorelement (4, 10) über eine größere Länge erstreckt als das erste Reflektorelement (1).

4. Speichenreflektor nach einem der Ansprüche 1 bis 3,
dadurch gekennzeichnet, daß sich das zweite Reflektorelement (4, 8, 10) mittig von dem ersten Reflektorelement (1) erstreckt, so daß es dessen zugeordnete Reflektorfläche im wesentlichen in zwei gleich große Abschnitte unterteilt.

5. Speichenreflektor nach einem der Ansprüche 1 bis 4,
dadurch gekennzeichnet, daß das zweite Reflektorelement (4, 8, 10) derart an dem ersten Reflektorelement (1) angebracht ist, daß die Berührungs- bzw. Verbindungsfläche der beiden Reflektorelemente im wesentlichen entlang der Radialen des Speichenrades verläuft.

6. Speichenreflektor nach einem der Ansprüche 1 bis 4,
dadurch gekennzeichnet, daß das zweite Reflektorelement derart an dem ersten Reflektorelement angebracht ist, daß die Berührungs- bzw. Verbindungsfläche der beiden Reflektorelemente etwa im rechten Winkel zur Radialen des Speichenrades verläuft.

7. Speichenreflektor nach einem der Ansprüche 1 bis 6,
dadurch gekennzeichnet, daß die beiden Reflektorelemente (1, 4, 8, 10) durch eine Klebeverbindung aneinander befestigt sind.

8. Speichenreflektor nach einem der Ansprüche 1 bis 6,
dadurch gekennzeichnet, daß die beiden Reflektorelemente einstückig hergestellt sind.

9. Speichenreflektor nach einem der Ansprüche 1 bis 8 ,
dadurch gekennzeichnet, daß α 2 etwa zwischen 100° und 160°, vorzugsweise zwischen 100° und 135° liegt.

## Claims

1. A spoke-mounted reflector for two-wheeled vehicles, particularly for bicycles, with a first reflecting element (1) which is secured to the spokes (3) essentially parallel to the plane of the spokes and has reflecting surfaces preferably on both sides, and a second reflecting element (4, 10) arranged at an angle to the first reflecting element (1),
characterised in that
a second reflecting element (4, 10) has on at least one side at least two mutually inclined reflecting surface sections (6, 7; 11, 12, 13), wherein the surface section (6, 13) adjoining the reflecting surface of the first reflecting element (1) includes with it an angle α 2 > 90°.

2. Spoke-mounted reflector according to claim 1,
characterised in that
the central axis (14) of the reflecting element (4, 10) extends essentially perpendicularly to the first reflecting element (1).

3. Spoke-mounted reflector according to claim 1 or 2,
characterised in that
the second reflecting element (4, 10) extends over a greater length than the first reflecting element (1).

4. Spoke-mounted reflector according to any one of claims 1 to 3
characterised in that
the second reflecting element (4, 8, 10) extends from the middle of the first reflecting element (1) so that it divides its associated reflecting surfaces essentially into two equally large sections.

5. Spoke-mounted reflector according to any one of claims 1 to 4,
characterised in that
the second reflecting element (4, 8, 10) is mounted at the first reflecting element (1) in such a way that the contact and connecting surfaces of the two reflecting elements extend essentially along the radial plane of the spoke-mounted wheel.

6. A spoke-mounted reflector according to any one of claim 1 to 4
characterised in that
the second reflecting element is mounted at the first reflecting element in such a way that the contact or connection surface of the two reflecting elements extends approximately at right angles to the radial plane of the spoked wheel.

7. A spoke-mounted reflector according to any one of claims 1 to 6,
characterised in that
the two reflecting elements (1, 4, 8, 10) are secured to each other by way of an adhesive connection.

8. A spoke-mounted reflector according to any one of claims 1 to 6,
characterised in that
the two reflecting elements are made of one piece.

9. A spoke-mounted reflector according to one of claims 1 to 8,
characterised in that
α 2 lies approximately between 100° and 160°, preferably between 100° and 135°.

## Revendications

1. Réflecteur de rayons pour des deux-roues, en particulier des bicyclettes, avec un premier élément de réflecteur (1), qui est fixé à des rayons (3), sensiblement parallèle au plan des rayons, et, de façon préférée, présente des surfaces de réflecteur des deux côtés, et avec un deuxième élément de réflecteur (4, 10) agencé en formant un angle par rapport au premier élément de réflecteur (1),
caractérisé en ce que le deuxième élément de réflecteur (4, 10) présente, à au moins un côté, au moins deux sections de surface de réflecteur (6, 7 ; 11, 12, 13) s'étendant en formant un angle les unes par rapport aux autres, la section de surface (6, 13) limitrophe à la surface de réflecteur du premier élément de réflecteur (1) enfermant avec celle-ci un angle α 2 > 90°.

2. Réflecteur de rayons selon la revendication 1, caractérisé en ce que l'axe médian (14) de l'élément de réflecteur (4, 10) s'étend sensiblement à angle droit par rapport au premier élément de réflecteur (1).

3. Réflecteur de rayons selon la revendication 1 ou la revendication 2, caractérisé en ce que le deuxième élément de réflecteur (4, 10) s'étend sur une plus grande longueur que le premier élément de réflecteur (1).

4. Réflecteur de rayons selon une des revendications 1 à 3, caractérisé en ce que le deuxième élément de réflecteur (4, 8, 10) s'étend au milieu du premier élément de réflecteur (1), de sorte qu'il subdivise la surface de réflecteur associée de celui-ci sensiblement en deux sections également grandes.

5. Réflecteur de rayons selon une des revendications 1 à 4, caractérisé en ce que le deuxième élément de réflecteur (4, 8, 10) est installé au premier élément de réflecteur (1) de telle sorte, que la surface de venue en contact ou bien de liaison des deux éléments de réflecteur s'étend sensiblement le long des rayons de la roue à rayons.

6. Réflecteur de rayons selon une des revendications 1 à 4, caractérisé en ce que le deuxième élément de réflecteur est installé au premier élément de réflecteur de telle sorte, que la surface de venue en contact ou bien de liaison des deux éléments de réflecteur s'étend à peu près à angle droit par rapport aux rayons de la roue à rayons.

7. Réflecteur de rayons selon une des revendications 1 à 6, caractérisé en ce que les deux éléments de réflecteur (1, 4, 8, 10) sont fixés l'un à l'autre par une liaison de collage.

8. Réflecteur de rayons selon une des revendications 1 à 6, caractérisé en ce que les deux éléments de réflecteur sont réalisés d'une seule pièce.

9. Réflecteur de rayons selon une des revendications 1 à 8, caractérisé en ce que α 2 se trouve à peu près entre 100° et 160°, de façon préférée entre 100° et 135°.
